(19) Europäisches Patentamt
European Patent Office
Office européen des brevets

(11) **EP 3 631 912 B1**

(12) **EUROPÄISCHE PATENTSCHRIFT**

(45) Veröffentlichungstag und Bekanntmachung des Hinweises auf die Patenterteilung:
**19.07.2023   Patentblatt 2023/29**

(21) Anmeldenummer: **18727778.5**

(22) Anmeldetag: **25.05.2018**

(51) Internationale Patentklassifikation (IPC):
**H01R 43/02** *(2006.01)*       **H02K 3/04** *(2006.01)*

(52) Gemeinsame Patentklassifikation (CPC):
**H01R 43/0228; H01R 43/0207; H01R 43/0221; H02K 15/0081; H02K 15/064**

(86) Internationale Anmeldenummer:
**PCT/EP2018/063776**

(87) Internationale Veröffentlichungsnummer:
**WO 2018/219802 (06.12.2018 Gazette 2018/49)**

(54) **KONTAKTIERVERFAHREN FÜR LACKISOLIERTE LEITER**

CONTACTING-MAKING METHOD FOR ENAMEL-INSULATED CONDUCTORS

PROCÉDÉ DE CONTACT POUR CONDUCTEURS ISOLÉS AU VERNIS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.05.2017   DE 102017111655**

(43) Veröffentlichungstag der Anmeldung:
**08.04.2020   Patentblatt 2020/15**

(73) Patentinhaber: **Friedrich-Alexander-Universität Erlangen-Nürnberg**
**91054 Erlangen (DE)**

(72) Erfinder:
• **GLÄSSEL, Tobias**
  **90425 Nürnberg (DE)**
• **FRANKE, Jörg**
  **91080 Marloffstein (DE)**
• **SPRENG, Simon**
  **90453 Nürnberg (DE)**

(74) Vertreter: **Louis Pöhlau Lohrentz**
**Patentanwälte**
**Merianstrasse 26**
**90409 Nürnberg (DE)**

(56) Entgegenhaltungen:
**EP-A2- 1 187 299     WO-A1-2011/076515**

EP 3 631 912 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Herstellung einer Spulenwicklung für elektrische Motoren oder elektrische Übertrager durch mechanisches und elektrisch leitendes Verbinden von Endstücken mehrerer lackisolierter Leiter und/oder lackisolierter Litzen.

In der Praxis werden zum Verbinden solcher lackisolierter Leiter oftmals zusätzliche Bauteile, wie beispielsweise Hülsen oder Endschuhe verwendet. Ein alternatives Verfahren sieht das Löten unter Zugabe von Lötzinn vor. Die Verwendung von solchen zusätzlichen Verbindungselementen oder zusätzlichen Materialien erfordert einen hohen Produktionsaufwand, wodurch die Herstellungskosten steigen. Ferner ist es aus der Praxis bekannt, Ultraschallkompaktieren und/oder Ultraschallschweißen zum Verbinden von Gliederelementen einzusetzen.

Das Dokument EP 1 187 299 A2 zeigt ein Verfahren zur Herstellung einer Wicklung für eine elektrodynamische Maschine, wobei die Leiterenden eines Walzdrahtes verformt und anschließend abisoliert werden und dann durch ein Schweißverfahren verbunden werden. Die Verformung des Walzdrahtes wird in D1 zur Reduzierung der Temperatur im Schweißprozess durchgeführt.

Das Dokument WO 2011/076515 A1 zeigt ein Verfahren zum elektrisch leitenden Verbinden eines Bündels von mit einer Isolierung versehenden Drähten, wobei deren Isolierung zumindest teilweise mittels Ultraschalleinwirkung entfernt wird.

Das Dokument DE 10 2009 059 307 A1 zeigt ein Verfahren zum elektrisch leitenden Verbinden von Drähten. Das Verfahren sieht vor, dass die Endstücke der Drähte mit Endhülsen versehen werden. Anschließend erfolgt zunächst ein Kunststoffultraschallschweißen, um anhaftenden Isolationslack zu entfernen. In einem zweiten Schritt erfolgt ein Metallultraschallschweißen, um die Leiterenden mit der Endhülse zu verbinden. Nachteilig bei diesem Verfahren ist neben dem Bedarf an zusätzlichen Verbindungselementen auch der große Platzbedarf für die Vorrichtung zum Ultraschallschweißen.

Aus der WO 2007 128 790 A1 ist ein Verfahren zur Herstellung eines Durchgangsknotens oder Endknotens von elektrischen Leitern bekannt. Auch hier wird ein zusätzliches Verbindungselement, nämlich eine Hülse verwendet, um einen solchen Knoten herzustellen. Nach Aufbringen der Hülse auf den Knoten, erfolgt ein Ultraschallschweißen, um die elektrisch leitende Verbindung zwischen den elektrischen Leitern herzustellen.

Aus der WO 95 108 66 A1 ist ein Verfahren zum Kompaktieren und anschließendem Schweißen von elektrischen Leitern bekannt. In einem ersten Schritt erfolgt eine Vorverdichtung von Leiterenden mittels Ultraschallkompaktieren. Im Anschluss an das Kompaktieren erfolgt in einem zweiten Schritt ein Ultraschallschweißen der Leiterenden, um eine dauerhafte elektrische Verbindung herzustellen. Auch hier ist wiederum der große Platzbedarf der Ultraschallschweißvorrichtung nachteilig.

Die vorliegende Erfindung befasst sich mit dem Problem, eine serientaugliche und prozesssichere Methode zur Spulenwicklung für elektrische Motoren oder elektrische Übertrager und zum elektrischen und mechanischen Verbinden von lackisolierten Leitern und/oder lackisolierten Litzen zu finden, das ohne zusätzliche Verbindungselemente arbeitet. Weiter soll das erfindungsgemäße Verfahren eine hohe Knotendichte ermöglichen. D.h. eine hohe Anzahl von Knoten auf möglichst geringem Raum.

Diese Aufgabe wird erfindungsgemäß durch ein Verfahren mit den Merkmalen des Anspruchs 1 gelöst.

Es wird ein Verfahren zur Herstellung einer Spulenwicklung für elektrische Motoren oder elektrische Übertrager vorgeschlagen, wobei aus lackierten Leiterstücken und/oder aus lackierten Litzenstücken ein Leiterelement ausgeformt wird und in einen Wicklungsträger, vorzugsweise ein Spulenkern oder ein Blechpaket eingesetzt wird, und wobei Durchgangsknoten oder Endknoten durch mechanisches und elektrisch leitendes Verbinden von Endstücken mehrerer lackisolierter Leiter und/oder lackisolierter Litzen hergestellt werden, um zwei oder mehrere der Leiterelemente untereinander zu verbinden.

Dabei ist erfindungsgemäß vorgesehen, dass zunächst in einem Schritt nach dem Ausformen eines Leiterelements und vor dem Einsetzen eines ausgeformten Leiterelements in den Wicklungsträger ein Ultraschallkompaktieren der zu verbindenden lackierten Leiterendstücke und/oder lackierten Litzenendstücke erfolgt, um Isolationslack zu entfernen, und dass nach dem Einsetzen der Leiterelemente, insbesondere aller Leiterelemente in den Wicklungsträger in einem darauffolgenden Schritt mittels Laserschweißen eine stoffschlüssige Verbindung zwischen den zu verbindenden Leiterendstücken und/oder Litzenendstücken hergestellt wird. Zunächst erfolgt eine Vorkonditionierung der Leiterenden durch den Prozess des Ultraschallkompaktierens. Anschließend erfolgt ein Laserschweißen der zu verbindenden Endstücke. Die Verbindung der Leiterendstücke oder Litzenendstücke bildet einen elektrisch leitenden Knoten, vorzugsweise einen Endknoten oder Durchgangsknoten aus. Dabei können mehrere Leiter eines Leiterelements miteinander verbunden werden. Es können aber auch mehrere Leiter mehrerer Leiterelemente verbunden werden, d.h. es wird eine elektrische Verbindung zwischen mehreren Leiterelementen geschaffen.

Die für das Ultraschallkompaktieren notwendigen Werkzeuge benötigen relativ viel Bauraum. Indem das Ultraschallkompaktieren bereits durchgeführt wird bevor das Leiterelement in den Spulenträger einführt wird, ist der dafür notwendige Bauraum noch vorhanden. Nach dem Einsetzen des ausgeformten Leiterelements in den Spulenträger oder Wicklungsträger wird dann das Laserschweißen durchgeführt. Dieses kann dann mit sehr geringem Platzbedarf durchgeführt werden, was zu einer hohen möglichen Knotendichte führt. Dadurch wird es ermöglicht, Spulenwicklungen, insbesondere Litzenwicklungen, für elektrische Antriebsmotoren prozesssicher herzustellen.

Weiter wird durch die hohe Knotendichte ein hoher Kupferfüllfaktor in der Spulenwicklung ermöglicht.

Durch das Laserschweißen erfolgt eine stoffschlüssige Verbindung der Leiterenden miteinander. Allerdings ist das Laserschweißen nur einsetzbar, sofern die Leiterenden abisoliert sind. D. h. insbesondere keinen Isolationslack mehr aufweisen. Der Isolationslack würde die Qualität der Laserschweißverbindung negativ beeinflussen. Daher ist es notwendig, vor dem Einsatz des Laserschweißens, die Endstücke abzuisolieren, also zu entlacken. Dies wird durch den Prozessschritt des Ultraschallkompaktierens ermöglicht. Durch das Ultraschallkompaktieren erfolgt ein möglichst vollständiges Entfernen des Isolationslacks an der Verbindungsstelle. Der Fachmann wählt die Parameter des Ultraschallkompaktierens dergestalt, dass im Bereich der Fügestelle ein Temperaturanstieg erfolgt, welcher eine thermische Entlackung zur Folge hat.

Als weiterer Vorteil wird insbesondere durch das Ultraschallkompaktieren neben dem Entlacken eine zumindest teilweise elektrische und mechanische Verbindung hergestellt wird. Vorzugsweise wird durch das Ultraschallkompaktieren bereits eine Art Kaltverschweißen der Leiter miteinander erzielt. D.h. bereits durch das Ultraschallkompaktieren erhält man zumindest eine teilweise elektrische Verbindung einzelner Leiter im Knotenbereich. Ein weiterer Vorteil, den man durch das Ultraschallkompaktieren erhält, ist die Herstellung einer definierten Knotengeometrie und die Erhöhung der Steifigkeit im Knotenbereich. Dies wird ermöglicht, indem durch das Ultraschallkompaktieren die einzelnen Leiter verdichtet und die Zwischenräume verringert werden. Damit einher geht eine Verringerung der benötigen Gesamtfläche im Knotenbereich.

Durch die Vorkonditionierung der Litzenenden wird zur Verbindung der Endstücke untereinander der Laserschweißprozess ermöglicht. Beim Laserschweißen erfolgt eine berührungslose stoffschlüssige Verbindungsausbildung ohne die Zugabe von Schweißzusätzen und ohne die Verwendung von Verbindungselementen. Dadurch kann das Laserschweißen auf kleinstem Raum erfolgen, wodurch eine hohe Knotendichte erzielt wird.

Es kann in einer Ausgestaltung auch vorgesehen sein, dass durch das Laserschweißen zugleich eine Verbindung zu einem massiven, vorzugsweise blanken, elektrischen Leiter hergestellt wird. Mit einem einzigen Verfahrensschritt, nämlich dem Laserschweißen, wird somit eine Verbindung der Leiterendstücke bzw. Litzenendstücke untereinander und mit einem weiteren massiven elektrischen Leiter erzielt.

Es kann in einer Ausgestaltung auch vorgesehen sein, dass zunächst in einem Schritt ein Ultraschallkompaktieren der zu verbindenden lackierten Leiterendstücke und/oder lackierten Litzenendstücke erfolgt um Isolationslack zu entfernen, und dass in einem darauffolgenden Schritt mittels Laserschweißen eine stoffschlüssige Verbindung zwischen den zu verbindenden Leiterendstücken und/oder Litzenendstücken und einem blanken elektrischen Leiter hergestellt wird. Somit wird mit einem einzigen Verfahrensschritt, nämlich dem Laserschweißen, eine Verbindung der Leiterendstücke bzw. Litzenendstücke untereinander und mit einem weiteren massiven elektrischen Leiter erzielt.

Der massive elektrische Leiter kann beispielsweise ein vorgeformter elektrischer Leiter sein. Dieser kann aus einem leitfähigen Metall oder einer leitfähigen metallischen Legierung bestehen. Der massive elektrische Leiter kann als isolierter Leiter, insbesondere lackisolierter Leiter, ausgebildet sein und blanke, also abisolierte oder isolationsfreie, Leiterendstücke aufweisen. Alternativ kann der elektrische Leiter als blanker, insbesondere nicht isolierter, elektrischer Leiter ausgebildet sein.

Es hat sich gezeigt, dass es in der Praxis, insbesondere bei engen Radien und/oder großen Leitungsquerschnitten schwierig sein kann, Leiterendstücke oder Litzenendstücke zu biegen. Über die Verwendung eines vorgeformten elektrischen Leiters als Verbindungsstück und Anbindung desselben mittels Laserschweißen, kann auch bei großen Leiterquerschnitten ein enger Radius, oder ein spitzer Winkel bei einem Durchgangsknoten realisiert werden. Es wird dadurch auch bei großen Leiterquerschnitten eine kompakte, bauraumsparende Anordnung der Leiter bzw. eine bauraumsparende Wicklung ermöglicht.

Dabei kann vorgesehen sein, dass durch den Laserschweißprozess Energie in Form von Laserstrahlung zugeführt wird, die derart bemessen ist, dass sowohl die vorkonditionierten Litzenenden als auch die Enden eines massiven, vorzugsweise blanken, elektrischen Leiters aufgeschmolzen werden. Durch Vermischen der entstehenden Schmelzen und anschließendem Erstarren kommt eine stoffschlüssige Verbindung zu Stande. Hierbei können noch nicht elektrisch verbundene Einzelleiter kontaktiert werden.

In einer vorzugsweisen Ausgestaltung kann vorgesehen sein, dass durch entsprechende Steuerung der Energieeinkopplung des Laserprozesses oder durch entsprechende Modulation der Laserenergie zunächst Verbrennungs- bzw. Isolationsrückstände, welche aus dem Kompaktierungsprozess noch vorhanden sind, zu eliminieren. Anschließend erfolgt die Einkopplung von Laserenergie derart, dass Leiterendstücke aufgeschmolzen werden, sodass in den Zwischenräumen zwischen den Leiterendstücken eine Schmelze und letzten Endes eine stoffschlüssige Verbindung entsteht.

Dadurch ist es möglich auf sehr geringem Bauraum eine hohe Anzahl von Verbindungsknoten herzustellen.

Vorzugsweise ist bei dem Ultraschallkompaktieren vorgesehen, dass über einen einstellbaren Seitenschieber vor oder während des Ultraschallkompaktierens eine definierte Knotengeometrie, insbesondere eine festgelegt Knotenbreite, ausgebildet wird, indem die zu verbindenden Leiterendstücke und/oder Litzenendstücke zwischen dem einstellbaren Seitenschieber und einer Anschlagplatte fixiert werden.

Insbesondere kann während des Ultraschallkompaktierens Ultraschallenergie über eine Sonotrode in zwischen dem einstellbaren Seitenschieber und der Anschlagplatte fixierten Leiterendstücke und/oder Litzenendstücke eingeleitet werden, wobei die Sonotrode einem Amboss gegenüberliegend angeordnet ist.

Um ein gutes Kompaktierergebnis zu erhalten, wird während des Ultraschallkompaktierens die Ultraschallenergie derart bemessen, dass in der Fügestelle ein Temperaturanstieg erfolgt, um die Leiterendstücke und/oder Litzenendstücke thermisch zu entlacken und dass zumindest ein Teil der Leiterendstücke und/oder Litzenendstücke miteinander kalt verschweißt werden. Vorzugsweise kann vorgesehen sein, dass die Ultraschallenergie derart bemessen wird, dass neben dem Entlacken zusätzlich eine elektrische und/oder mechanische Verbindung von zumindest einem Teil, insbesondere einem Großteil, der Leiterendstücke und/oder Litzenendstücke erfolgt. Großteil bezieht sich hier insbesondere darauf, dass ungefähr die Hälfte oder mehr als die Hälfte der Leiterendstücke und/oder Litzenendstücke miteinander verbunden werden.

Ein Vorteil ist auch, dass beim Ultraschallkompaktieren ein festgelegtes Höhe zu Breite Verhältnis eines Durchgangsknotens oder Endknotens ausgebildet werden kann.

An das Ultraschallkompaktieren schließt sich der Laserschweißprozess an. Dabei kann vorgesehen sein, dass beim Laserschweißen die Laserenergie derart bemessen wird, dass zwischen den zu verbindenden, durch Ultraschallkompaktieren vorverdichteten Leiterendstücken und/oder Litzenendstücken eine Schmelze entsteht, wobei diese untereinander stoffschlüssig verbunden werden.

Insbesondere ist dabei vorgesehen, dass beim Laserschweißen und/oder beim Ultraschallkompaktieren keine Schweißzusätze zugegeben werden.

Ein weiterer Vorteil ist, dass beim Laserschweißen und/oder beim Ultraschallkompaktieren keine sich mit den Leiterendstücken und/oder Litzenendstücken verbindenden Verbindungselemente und auch keine Schweißzusatzstoffe benötigt werden.

Durch die bei dem erfindungsgemäßen Verfahren mögliche hohe Knotendichte kann dieses Verfahren zur Herstellung von Spulenwicklungen für elektrische Motoren verwendet werden. Bei hocheffizienten elektrischen Antriebsmotoren wird in der Praxis zunehmend dazu übergegangen, dass Litzenwicklungen verwendet werden, um so die durch eine Steigerung der elektrischen Frequenz in der Wicklung hervorgerufenen Verluste zu minimieren. Klassische Wickelverfahren, wie beispielsweise Nadelwickeln, führen mit ihren langen Taktzeiten und einer nur mäßigen Reproduzierbarkeit nicht zu den qualitativ erwünschten Ergebnissen.

In Ausgestaltungen, bei denen die Anforderungen an die Wicklungsdichte etwas geringer sind, kann auch vorgesehen sein, dass nach dem Einsetzen eines oder mehrerer Leiterelemente in den Wicklungsträger das Ultraschallkompaktieren und anschließend das Laserschweißen durchgeführt wird.

In einer Ausführungsform kann vorgesehen sein, dass ein massiver lackisolierter elektrischer Leiter mit blanken Leiterendstücken, oder ein massiver blanker elektrischer Leiter mit dem Durchgangsknoten oder Endknoten verbunden wird. Hierbei kann der elektrische Leiter eine Distanz überbrücken, um den Durchgangsknoten oder Endknoten mit einem zweiten entsprechend der Distanz entfernt angeordneten Durchgangsknoten oder Endknoten zu verbinden.

Weiterhin kann vorteilhafterweise vorgesehen sein, dass durch den massiven elektrischen Leiter oder dessen blankes elektrisches Leiterendstück der Durchgangsknoten oder der Endknoten mit einem elektronischen Bauelement verbunden wird. Beispielsweise kann ein Anschluss des elektronischen Bauelements mit dem Durchgangsknoten oder Endknoten verbunden werden. Somit kann durch das Laserschweißen der Durchgangsknoten oder Endknoten mit einem elektronischen Bauelement verbunden werden und/oder ein elektronisches Bauelement kann in den Durchgangsknoten oder Endknoten integriert werden. Als elektronisches Bauelement kann ein Halbleiter, beispielsweise ein Transistor oder eine Diode, oder ein passives Bauelement, beispielsweise ein Widerstand oder ein Kondensator oder eine Spule, verwendet werden. Es kann auch vorgesehen sein, eine integrierte Schaltung als Bauelement zu verwenden.

Es kann vorgesehen sein, dass der blanke elektrische Leiter oder das blanke Leiterendstück ein elektronisches Bauelement trägt, und/oder dass das blanke Leiterendstück oder der blanke elektrische Leiter ein Anschlussdraht eines elektronischen Bauteils ist.

Vorteilhafterweise kann vorgesehen sein, dass der massive elektrische Leiter ein vorgeformter elektrischer Leiter ist, vorzugsweise um eine vorgegebene Geometrie, insbesondere eine Kurvengeometrie, insbesondere ein Wicklungspaket, aus zwei über den vorgeformten elektrischen Leiter verbundenen Durchgangsknoten zu bilden. Über den vorgeformten massiven Leiter kann ein sehr kompaktes Wicklungspaket oder eine Kurvengeometrie mit engen Radien geschaffen werden.

Insbesondere kann vorgesehen sein, dass das Laserschweißen zum Anschließen des elektronischen Bauelements zusammen, vorzugsweise zeitgleich, mit dem Laserschweißen zum stoffschlüssigen Verbinden der zu verbindenden Leiterendstücke oder Litzenendstücken erfolgt.

Um die Qualität der Verbindung in den Durchgangsknoten oder Endknoten zu erhöhen, kann in einer Ausgestaltung vorgesehen sein, dass zwischen dem Ultraschallkompaktieren und dem Laserschweißen eine Reinigung der Endstücke eines oder mehrerer Leiterelemente durchgeführt wird. Durch die Reinigung der Endstücke können eventuelle Rückstände des Isolationslacks und/oder Oxide entfernt werden.

Zur Herstellung einer Spulenwicklung für einen Motor gemäß dem erfindungsgemäßen Verfahren ist eine entsprechende Vorrichtung vorgesehen, mit deren Hilfe Spulenwicklungen für Motoren im industriellen Maßstab automatisch und mit hoher Reproduzierbarkeit hergestellt werden können.

Dabei kann vorgesehen sein, dass die Vorrichtung zur Herstellung einer Spulenwicklung und/oder Motorwicklung folgende Komponenten umfasst, eine Zustellvorrichtung zur Zustellung von lackisolierten Drahtleitern und/oder lackisolierte Litzen, weiter umfassend eine Ausformvorrichtung, um aus den lackisolieren Drahtleitern und/oder lackisolierten Litzen Leiterelemente auszuformen, weiter umfassend eine Haltevorrichtung und/oder Zuführvorrichtung für einen Spulenträger und/oder ein Blechpaket, weiter umfassend eine Transportvorrichtung für die ausgeformten Leiterelemente, um diese in den Spulenträger oder das Blechpaket einzusetzen, weiter umfassend einen Ultraschallkopf, aufweisend einen Amboss, eine Anschlagplatte, einen vorzugsweise einstellbar verschiebbaren, Seitenschieber und eine Sonotrode, weiter umfassend eine Laserschweißvorrichtung, weiter umfassend eine Steuerungsvorrichtung dazu ausgebildet die Komponenten gemäß dem erfindungsgemäßen Herstellungsverfahren zu steuern.

Um die Qualität der hergestellten Spulenwicklung zu überprüfen kann eine elektrische Messvorrichtung vorgesehen sein, um die elektrische Leitfähigkeit der Spulenwicklung oder Motorwicklung zu messen.

Das erfindungsgemäße Verfahren kann insbesondere bei der Herstellung kompakter bzw. leistungsfähiger Wicklungen für Elektromotoren oder Transformatoren angewendet werden.

In den Figuren, sowie in der nachfolgenden Figurenbeschreibung sind weitere Ausgestaltungen der Erfindung beschrieben. Dabei zeigen

Fig. 1: ein Beispiel eines Ultraschallkopfs zum Ultraschallkompaktieren;

Fig. 2: eine schematische Darstellung der Verdichtung eines Leiterendstücks beim Ultraschallkompaktieren;

Fig. 3: eine schematische Darstellung des Ablaufs bei der Herstellung einer Spulenwicklung für einen Motor;

Fig. 4: eine schematische Darstellung eines Durchgangsknoten nach erfindungsgemäßer Durchführung des beschriebenen Verfahrens;

Fig. 5: eine schematische Darstellung einer Ausführungsform eines Durchgangs-/Endknotens mit Anbindung eines massiven elektrischen Leiters.

Fig. 6a, 6b: eine schematische Darstellung einer Ausführungsform eines Durchgangs-/Endknotens mit Anbindung eines elektrischen Bauteils;

Fig. 7a-7d: eine weitere schematische Darstellung des Ablaufs bei der Herstellung einer Spulenwicklung für einen Motor.

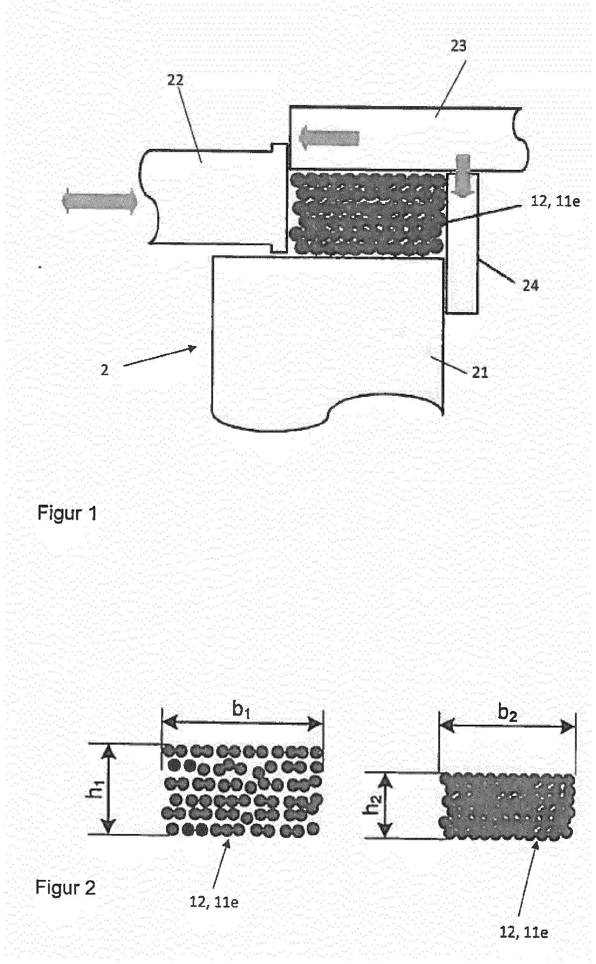

Figur 1 zeigt einen Ultraschallkopf 2. Dieser umfasst eine Sonotrode 21 zur Einleitung von Ultraschallenergie. Der Sonotrode 21 gegenüberliegend ist ein Amboss 23 angeordnet. Rechtwinklig zu dem Amboss 23 erstreckt sich eine Anschlagplatte 24. Ein einstellbarer Seitenschieber 22 ist beweglich gelagert und kann mittels eines Antriebes automatisch gesteuert auf dem Amboss 23 zubewegt werden. Zwischen dem Amboss 23, der Sonotrode 21, der Anschlagplatte 24 und dem beweglichen Seitenschieber 22 wird ein Zwischenraum zur Aufnahme von Leiterendstücken 11e ausgebildet. Die zu verbindenden Endstücke von lackisolieren Drähten und/oder Litzen werden in diesen Zwischenraum eingeführt. Durch Bewegen des Seitenschiebers 22 erfolgt eine Vorfixierung der Leiterenden. Anschließend wird über die Sonotrode 21 Ultraschallenergie in das Bündel aus Leiterendstücken 11e eingeleitet.

Aufgrund der Einleitung der Ultraschallenergie erfolgt eine Verdichtung der Leiterendstücke 11e, wie in Figur 2 dargestellt. Durch die Verdichtung beim Ultraschallkompaktieren, wird die von den Leiterendstücken 11e bzw. den Litzenendstücken in Anspruch genommene Querschnittsfläche reduziert. Dabei gilt:

$$h1*b1 > h2*b2$$

Durch das Ultraschallkompaktieren erfolgt eine teilweise bzw. vollständige Entfernung des Isolationslacks im Bereich des Verbindungsknotens, also der zu einem Durchgangsknoten oder Endknoten verbundenen Leiterenden. Weiter erfolgt durch das Ultraschallkompaktieren bereits eine mechanische Verbindung einzelner Leiter 12 in dem Knotenbereich und ebenso bereits ein zumindest ein teilweises bzw. vollständiges elektrisches Verbinden der Leiterenden.

Über den Abstand zwischen Amboss 23 und Sonotrode 21 sowie den einstellbaren Seitenschieber 22 kann eine definierte Knotengeometrie mit einem vordefinierten Verhältnis b1 zu h1 hergestellt werden. Durch die Verdichtung mittels des Ultraschallkompaktierens erhöht sich zudem die Steifigkeit im Knotenbereich. Dadurch können die Leiterenden bereits in einer für das anschließende Laserschweißen benötigten relativen Position zueinander angeordnet werden und behalten diese inne, ohne dass Haltewerkzeuge oder Verbindungshülsen notwendig wären.

Durch das sich an das Ultraschallkompaktieren anschließende Laserschweißen, erfolgt dann eine berührungslose stoffschlüssige Verbindungsausbildung, ohne dass Schweißzusätze oder zusätzliche Verbindungselemente benötigt werden.

Das Laserschweißen kann auf kleinstem Raum eingesetzt werden. Für das Laserschweißen wird den zu verbindenden Leiterenden Energie in Form von Laserstrahlen zugeführt, wobei diese aufschmelzen und sich die Schmelzen der Leiterenden vermischen. Nach dem Abschalten der Laserenergiezufuhr fällt die Temperatur ab und die Schmelze erstarrt, wodurch eine stoffschlüssige Verbindung zwischen den Leiterenden resultiert. Dabei werden dann im Kompaktierungsprozess noch nicht miteinander verbundene Leiterenden zuverlässig miteinander verbunden und elektrisch kontaktiert.

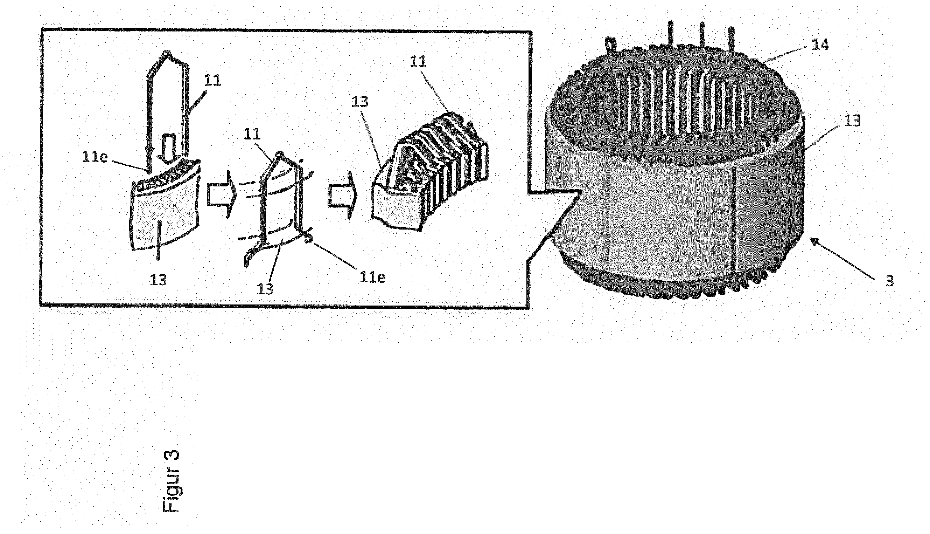

In der Figur 3 ist schematisch die Herstellung einer Spulenwicklung gemäß dem erfindungsgemäßen Verfahren dargestellt. Zunächst werden Drahtstücke, bzw. Litzenstücke abgelängt und zu einem Leiterelement 11 ausgeformt. Die Enden des Leiterelements 11 werden mittels Ultraschallkompaktieren vorkonditioniert, dabei verdichtet und zumindest teilweise miteinander verbunden. Gleichzeitig werden die Enden entlackt.

Nach den Ultraschallkompaktieren werden die Leiterelemente 11, wie in Figur 3 dargestellt, in einen Spulenträger, bzw. Blechpaket 13, eingeführt. Danach erfolgt eine Verschränkung der Enden des Leiterelements 11. Durch die Verschränkung der Enden des Leiterelements 11 entsteht eine regelmäßige Knotenstruktur, die in der Ausschnittsvergrößerung der Unterseite des Blechpakets 13 in Figur 3 dargestellt ist. Anschließend kann durch Laserschweißen zwischen den Leiterelementen 11 ein Durchgangsknoten 14, bzw. ein Endknoten hergestellt werden.

Am Ende des Herstellungsverfahrens erhält man eine Motorwicklung 3 mit einem vollbestückten Blechpaket 13, dessen Leiterelemente 11 mittels einer Vielzahl von Durchgangsknoten 1 und/oder Endknoten verbunden sind. Diese Motorwicklung 3 kann dann zur Herstellung eines effizienten Elektromotors verwendet werden.

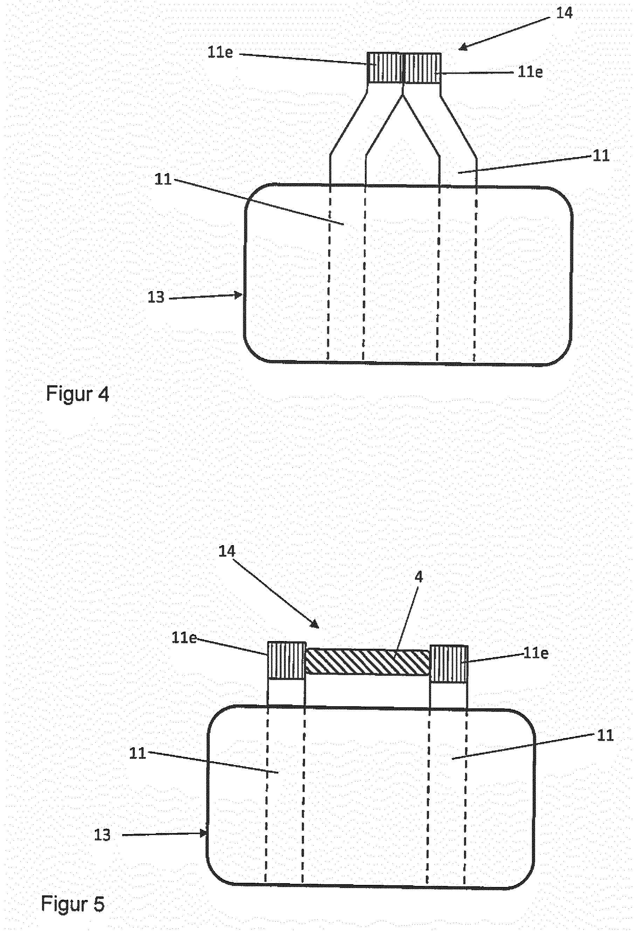

In Figur 4 ist beispielhaft eine Anordnung eines Durchgangsknotens 14 nach der erfindungsgemäßen Durchführung des beschriebenen Verfahrens des Ultraschallkompaktierens und anschließenden Laserschweißens dargestellt. In einem Blechpaket 13 sind zwei Litzenpakete angeordnet. Ein Litzenpaket besteht aus einer Vielzahl von einzelnen im Wesentlichen parallel zueinander verlaufender, lackisolierter Leiter bzw. Litzen. Durch Vergrößern der Anzahl Leiter oder Litzen wird der wirksame Querschnitt des Litzenpakets vergrößert bzw. der elektrische Widerstand reduziert. Die Litzenpakete werden an ihren Enden durch Ultraschallkompaktieren entlackt und kompaktiert. Die beiden so entstandenen kompaktierten Bereiche werden zusammengeführt und mittels Laserschweißen stoffschlüssig verbunden um einen Durchgangsknoten 14 zu bilden.

Auf diese Weise erhält man einen Durchgangsknoten 14 und durch Anordnen mehrerer solcher Durchgangsknoten 14 und/oder Endknoten kann, wie in Figur 3 gezeigt, eine Motorwicklung 3 mit einem vollbestückten Blechpaket 13, dessen Leiterelemente 11 mittels einer Vielzahl von Durchgangsknoten 14 und/oder Endknoten verbunden sind, hergestellt werden.

In Figur 5 ist ein Beispiel eines Durchgangsknotens 14 gezeigt. Hier sind wieder zwei Litzenpakete in einem Blechpaket 13 aufgenommen. Das Blechpaket 13 dient unter anderem als Halter oder Träger für die Litzenpakete und ist für das erfindungsgemäße Verfahren optional. Die kompaktierten Bereiche der beiden Litzenpakete sind mittels eines massiven, elektrisch leitfähigen Leiters 4 verbunden. Der Leiter ist ein massives vorgeformtes Leiterstück und dient als elektrisches Verbindungselement zwischen den beiden Litzenpaketen. Der vorgeformte massive elektrische Leiter 4 überbrückt einerseits die Distanz zwischen den beiden Litzenpaketen. Andererseits bildet er den Radius des Blechpakets 13 bzw. der Wicklung (wie in Figur 3 dargestellt) nach.

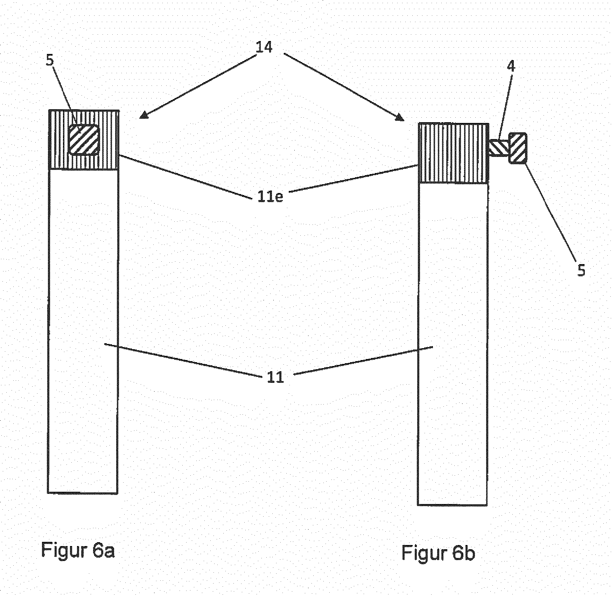

In den Figuren 6a und 6b ist jeweils eine Seitenansicht eines Endknotens gezeigt, an den ein elektronisches Bauelement 5 angeschlossen ist. Das elektronische Bauelement 5 weist einen Anschluss mit einem massiven elektrischen Leiter 4, beispielsweise einen Anschlussdraht, auf. Das Endstück des Litzenpakets wird zur Herstellung des Endknotens zunächst durch Ultraschallkompaktieren entlackt bzw. kompaktiert. Anschließend erfolgt durch Laserschweißen eine stoffschlüssige Verbindung zwischen den einzelnen Litzen des Litzenpakets und zugleich eine stoffschlüssige Verbindung mit dem Anschlussdraht des elektronischen Bauteils 5. Das elektronische Bauteil 5 kann beispielsweise ein Halbleiter, vorzugsweise ein Transistor oder eine Diode sein.

Durch die in Figuren 6a und 6b gezeigten Anwendungen des beschriebenen Verfahrens ist es beispielsweise möglich ohne den Einsatz von Zusatzwerkstoffen elektronische Elemente oder Bauteile 5 direkt in eine Motorwicklung 3 zu integrieren.

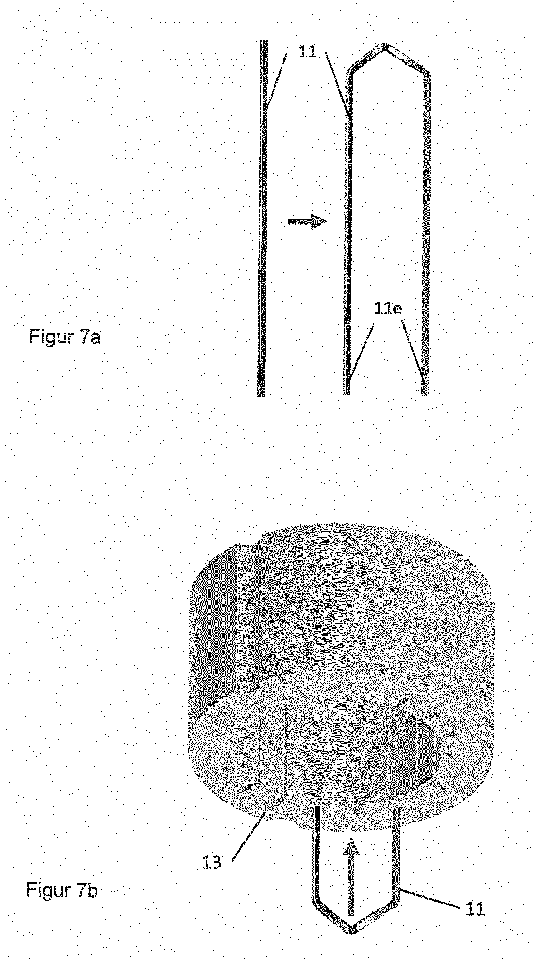

Die Figuren 7a bis 7d zeigen eine Möglichkeit zur Herstellung einer Motorwicklung anhand des erfindungsgemäßen Verfahrens. Die Figur 7a ist zweigeteilt. Auf der linken Seite ist dargestellt, dass in einem ersten Schritt zunächst ein Leiterstück bzw. ein Litzenbündel auf eine passende Länge abgelängt wird. Danach erfolgt, wie auf der rechten Seite der Figur 7a dargestellt, eine Formgebung des Leiters bzw. des Litzenpakets. Die freien Enden des Leiters bzw. Litzenbündels werden in nachfolgenden Schritten durch Ultraschallkompaktieren und Laserschweißen miteinander verbunden.

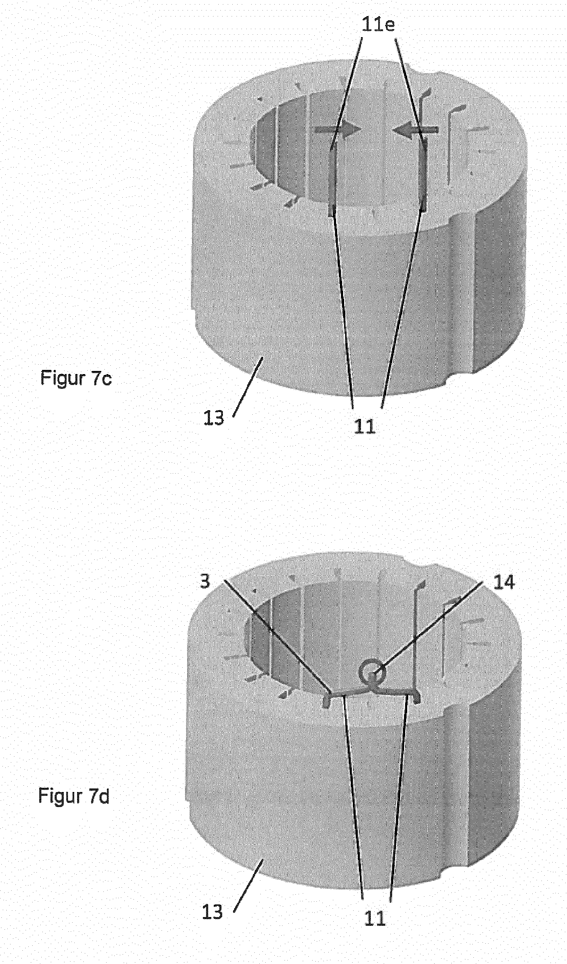

Die Figur 7b zeigt den Verfahrensschritt des Einsetzens des vorgeformten Leiters bzw. Litzenbündels in einen Spulenträger oder ein Blechpaket 13. Bei korrekt eingesetztem Leiter bzw. Litzenbündel ragen die freien Enden des Leiters bzw. Litzenbündels an einer Seite des Spulenträgers hervor wie in Figur 7c zu sehen ist. Nacheinander können auf gleiche Art und Weise eine Vielzahl von Leitern bzw. Litzenbündeln in den Wicklungsträger bzw. Spulenträger eingesetzt werden, um eine Motorwicklung herzustellen. Wie in Figur 7c durch Pfeile angedeutet, werden die freien Enden benachbarter Leiter bzw. Litzenbündel aufeinander zu gebogen bzw. verschränkt. An der Kontaktstelle erfolgt dann zunächst ein Ultraschallkompaktieren um die freien Enden der Leiter bzw. Litzenbündel zu Entlacken und eine erste mechanische und elektrisch leitende Verbindung zu schaffen und einen Durchgangsknoten 14 oder Endkonten zu bilden, wie in Figur 7d dargestellt ist.

Die Anordnung der Durchgangsknoten 14 oder Endknoten bzw. des Anschlusses des massiven elektrischen Leiters 4 oder des elektrischen Bauelementes 5 nicht auf die in den Figuren gezeigte Geometrie beschränkt. Weitere Anschlussgeometrien, insbesondere gabelförmige Anschlussgeometrien sind genauso möglich. Auch ist die Stoßgeometrie zwischen dem elektrischen Leiter und den kompaktierten Bereichen der Litzenenden nicht auf die in Figuren 6a und 6b gezeigte Stoßgeometrie beschränkt. So sind auch andere Stoßgeometrien, insbesondere Überlapp-, Stumpf, T- und/oder Bördelstoßgeomtrien möglich, die durch die erfindungsgemäße Anwendung des gezeigten Verfahrens des Ultraschallkompaktierens und anschließenden Laserschweißens erzeugt werden können.

Bezugszeichenliste

| | |
|---|---|
| 11 | Leiterelement |
| 11e | Leiterendstück |
| 12 | Leiter |
| 13 | Blechpaket |
| 14 | Durchgangsknoten |
| 2 | Ultraschallkopf |
| 21 | Sonotrode |
| 22 | Seitenschieber |
| 23 | Amboss |
| 24 | Anschlagplatte |
| 3 | Motorwicklung |
| 4 | massiver, elektrischer Leiter (vorgeformt) |
| 5 | elektronisches Bauelement |

**Patentansprüche**

1. Verfahren zur Herstellung einer Spulenwicklung (3) für elektrische Motoren oder elektrische Übertrager, wobei aus lackierten Leiterstücken und/oder aus lackierten Litzenstücken ein Leiterelement (11) ausgeformt wird und in einen Wicklungsträger, vorzugsweise ein Spulenkern oder ein Blechpaket (13) eingesetzt wird, und wobei Durchgangsknoten (14) oder Endknoten durch mechanisches und elektrisch leitendes Verbinden von Endstücken mehrerer lackisolierter Leiter (12) und/oder lackisolierter Litzen hergestellt werden, um zwei oder mehrere der Leiterelemente (11) untereinander zu verbinden, **dadurch gekennzeichnet,** **dass** zunächst in einem Schritt nach dem Ausformen eines Leiterelements (11) und vor dem Einsetzen eines ausgeformten Leiterelements (11) in den Wicklungsträger ein Ultraschallkompaktieren der zu verbindenden lackierten Leiterendstücke (11e) und/oder lackierten Litzenendstücke erfolgt, um Isolationslack zu entfernen, und dass nach dem Einsetzen der Leiterelemente (11), insbesondere aller Leiterelemente (11) in den Wicklungsträger in einem darauffolgenden Schritt mittels Laserschweißen eine stoffschlüssige Verbindung zwischen den zu verbindenden Leiterendstücken (11e) und/oder Litzenendstücken hergestellt wird.

2. Verfahren nach Anspruch 1 **dadurch gekennzeichnet,** **dass** durch das Laserschweißen zugleich eine Verbindung zu einem massiven, vorzugsweise lackisolierten oder blanken, elektrischen Leiter hergestellt wird.

3. Verfahren nach einem der Ansprüche 1 bis 2, **dadurch gekennzeichnet,**

   **dass** über einen einstellbaren Seitenschieber (22) vor oder während des Ultraschallkompaktierens eine definierte Knotengeometrie, insbesondere eine festgelegt Knotenbreite, ausgebildet wird, indem die zu verbindenden Leiterendstücke (11e) und/oder Litzenendstücke zwischen dem einstellbaren Seitenschieber (22) und einer Anschlagplatte (24) fixiert werden, und/oder

   **dass** während des Ultraschallkompaktierens Ultraschallenergie über eine Sonotrode (21) in zwischen dem einstellbaren Seitenschieber (22) und der Anschlagplatte (24) fixierten Leiterendstücke (11e) und/oder Litzenendstücke eingeleitet wird, wobei die Sonotrode (21) einem Amboss (23) gegenüberliegend angeordnet ist.

4. Verfahren nach einem der vorhergehenden Ansprüche, **dadurch gekennzeichnet,** **dass** während dem Ultraschallkompaktieren die Ultraschallenergie derart bemessen wird, dass in der Fügestelle ein Temperaturanstieg erfolgt, um die Leiterendstücke (11e) und/oder Litzenendstücke thermisch zu entlacken und zumindest ein Teil der Leiterendstücke (11e) und/oder Litzenendstücke miteinander kalt verschweißt wird, vorzugsweise dass die Ultraschallenergie derart bemessen wird, dass neben dem Entlacken zusätzlich eine elektrische und/oder mechanische Verbindung von zumindest einem Teil, insbesondere einem Großteil, der Leiterendstücke (11e) und/oder Litzenendstücke erfolgt.

5. Verfahren nach einem der vorhergehenden Ansprüche,
**dadurch gekennzeichnet,**
**dass** beim Ultraschallkompaktieren ein festgelegtes Höhe zu Breite Verhältnis eines Durchgangsknotens (14) oder Endknotens ausgebildet wird.

6. Verfahren nach einem der vorhergehenden Ansprüche,
**dadurch gekennzeichnet,**
**dass** beim Laserschweißen die Laserenergie derart bemessen wird, dass zwischen den zu verbindenden, durch Ultraschallkompaktieren vorverdichteten Leiterendstücken (11e) und/oder Litzenendstücken eine Schmelze entsteht, wobei diese untereinander stoffschlüssig verbunden werden.

7. Verfahren nach einem der vorhergehenden Ansprüche,
**dadurch gekennzeichnet,**

**dass** beim Laserschweißen und/oder beim Ultraschallkompaktieren keine Schweißzusätze zugegeben werden, und/oder
**dass** beim Laserschweißen und/oder beim Ultraschallkompaktieren keine sich mit den Leiterendstücken (11e) und/oder Litzenendstücken verbindenden Verbindungselemente verwendet werden.

8. Verfahren nach einem der Ansprüche 2 bis 7,
**dadurch gekennzeichnet,**
**dass** der massive elektrische Leiter eine Distanz überbrückt, um den Durchgangsknoten (14) oder Endknoten mit einem zweiten entfernt angeordneten Durchgangsknoten (14) oder Endknoten zu verbinden.

9. Verfahren nach einem der Ansprüche 2 bis 8,
**dadurch gekennzeichnet,**
**dass** durch den massiven elektrischen Leiter oder dessen blankes elektrisches Leiterendstück (11e) der Durchgangsknoten (14) oder der Endknoten mit einem elektronischen Bauelement (7) verbunden wird, vorzugsweise dass der massive elektrische Leiter oder dessen blankes Leiterendstück ein elektronisches Bauelement (5) trägt, und/oder dass das blanke Leiterendstück oder der elektrische Leiter ein Anschlussdraht eines elektronischen Bauteils (5) ist.

10. Verfahren nach einem der Ansprüche 2 bis 9,
**dadurch gekennzeichnet,**

**dass** der massive elektrische Leiter ein vorgeformter elektrischer Leiter ist, vorzugsweise um eine vorgegebene Geometrie, insbesondere eine Kurvengeometrie, insbesondere ein Wicklungspaket, aus zwei über den vorgeformten elektrischen Leiter verbundenen Durchgangsknoten (14) zu bilden.

11. Verfahren nach Anspruch 9 oder 10,
**dadurch gekennzeichnet,**
**dass** das Laserschweißen zum Anschließen des elektronischen Bauelements (5) zusammen, vorzugsweise zeitgleich, mit dem Laserschweißen zum stoffschlüssigen Verbinden der zu verbindenden Leiterendstücke (11e) oder Litzenendstücken erfolgt.

12. Verfahren nach einem der vorhergehenden Ansprüche,
**dadurch gekennzeichnet,**
**dass** zwischen dem Ultraschallkompaktieren und dem Laserschweißen eine Reinigung der Endstücke eines oder mehrerer Leiterelemente (11) durchgeführt wird.

13. Vorrichtung zur Herstellung einer Spulenwicklung und/oder Motorwicklung (3), umfassend folgende Komponenten,

eine Zustellvorrichtung zur Zustellung von lackisolierten Drahtleitern und/oder lackisolierte Litzen,
weiter umfassend eine Ausformvorrichtung um aus den lackisolieren Drahtleitern und/oder lackisolierten Litzen Leiterelemente (11) auszuformen, weiter umfassend eine Haltevorrichtung und/oder Zuführvorrichtung für einen Spulenträger und/oder ein Blechpaket (13),
weiter umfassend eine Transportvorrichtung für die ausgeformten Leiterelemente (11), um diese in den Spulenträger oder das Blechpaket (13) einzusetzen,
weiter umfassend einen Ultraschallkopf (2), aufweisend einen Amboss (23),
eine Anschlagplatte (24), einen Seitenschieber (22) und eine Sonotrode (21),
weiter umfassend eine Laserschweißvorrichtung,
weiter umfassend eine Steuerungsvorrichtung dazu ausgebildet die Komponenten gemäß dem Herstellungsverfahren nach einem der Ansprüche 1 bis 12 zu steuern.

14. Vorrichtung nach Anspruch 13,
**dadurch gekennzeichnet,**
**dass** weiter umfassend eine elektrische Messvorrichtung vorgesehen ist, mittels derer die elektrische Leitfähigkeit der Spulenwicklung oder Motorwicklung (3) gemessen wird.

**Claims**

1. Method for production of a coil winding (3) for electric motors or electric transformers, wherein a conductor element (11) is formed from coated conductor parts and/or from coated stranded wire pieces and is inserted into a winding support, preferably a coil core or a laminated core (13), and wherein intermediate nodes (14) or end nodes are manufactured by means of mechanical and electrically conductive connecting of end pieces of several conductors (12) insulated with lacquer and/or stranded wires insulated with lacquer, in order to connect two or more of the conductor elements (11) to each other, **characterised in that** initially, in a step after the formation of a conductor element (11) and before the insertion of a formed conductor element (11) into the winding support, an ultrasound compacting of the coated conductor end pieces (11e) and/or of the coated stranded wire end pieces to be connected occurs in order to remove insulating coating, and **in that**, after the insertion of the conductor elements (11), in particular of all conductor elements (11), into the winding support, a material connection between the conductor end pieces (11e) and/or the stranded wire end pieces to be connected is produced by means of laser welding in a following step.

2. Method according to claim 1, **characterised in that** by means of the laser welding, a connection to a solid electrical conductor which is preferably insulated with lacquer or uncoated is simultaneously produced.

3. Method according to one of claims 1 to 2, **characterised in that** before or during the ultrasound compacting, a defined node geometry, in particular a defined node width, is formed by means of an adjustable lateral slider (22) by fixing the conductor end pieces (11e) and/or the stranded wire end pieces to be connected between the adjustable lateral slider (22) and a stop plate (24), and/or **in that**, during the ultrasound compacting, ultrasound energy is introduced into conductor end pieces (11e) and/or stranded wire end pieces fixed between the adjustable lateral slider (22) and the stop plate (24) via a sonotrode (21), wherein the sonotrode (21) is arranged opposite an anvil (23).

4. Method according to one of the preceding claims, **characterised in that** during the ultrasound compacting, the ultrasound energy is dimensioned in such a way that an increase in temperature occurs in the joining point, in order to thermally remove the coating from the conductor end pieces (11e) and/or stranded wire end pieces, and at least one part of the conductor end pieces (11e) and/or stranded wire end pieces is cold-welded with each other, preferably **in that** the ultrasound energy is dimensioned in such a way that, along with removing the coating, an electrical and/or mechanical connecting of at least one part, in particular a majority, of the conductor end pieces (11e) and/or stranded wire end pieces additionally occurs.

5. Method according to one of the preceding claims, **characterised in that** in the ultrasound compacting, a fixed height-to-width ratio of an intermediate node (14) or end node is formed.

6. Method according to one of the preceding claims, **characterised in that** in the laser welding, the laser energy is dimensioned in such a way that a melt is produced between the conductor end pieces (11e) and/or stranded wire end pieces to be connected and pre-compacted by ultrasound compacting, wherein these are materially connected to each other.

7. Method according to one of the preceding claims, **characterised in that**

   in the laser welding and/or in the ultrasound compacting, no welding filler materials are added, and/or
   **in that** in the laser welding and/or in the ultrasound compacting, no connecting elements that connect with the conductor end pieces (11e) and/or stranded wire end pieces are used.

8. Method according to one of claims 2 to 7, **characterised in that** the solid electrical conductor bridges a distance in order to connect the intermediate node (14) or end node with a second intermediate node (14) or end node that is arranged spaced apart.

9. Method according to one of claims 2 to 8, **characterised in that** the intermediate node (14) or the end node is connected with an electronic component (7) by means of the solid electrical conductor or its uncoated electrical conductor end piece (11e), preferably **in that** the solid electrical conductor or its uncoated conductor end piece supports an electronic component (5), and/or **in that** the uncoated conductor end piece or the electrical conductor is a connecting wire of an electronic component (5).

10. Method according to one of claims 2 to 9, **characterised in that** the solid electrical conductor is a preformed electrical conductor, preferably in order to form a predetermined shape, in particular a curved shape, in particular a winding package, from two intermediate nodes (14) connected by means of the preformed electrical conductor.

11. Method according to claim 9 or 10,
    **characterised in that**
    the laser welding for connecting the electronic component (5) occurs together, preferably simultaneously, with the laser welding for the material connection of the conductor end pieces (11e) or stranded wire end pieces to be connected.

12. Method according to one of the preceding claims,
    **characterised in that**
    between the ultrasound compacting and the laser welding, a cleaning of the end pieces of one or more conductor elements (11) is carried out.

13. Device for the production of a coil winding and/or motor winding (3), comprising the following components,

    a delivery device for delivering in wire conductors insulated with lacquer and/or stranded wires insulated with lacquer,

    further comprising a shaping device in order to form conductor elements (11) out of the wire conductors insulated with lacquer and/or stranded wires insulated with lacquer,

    further comprising a clamping device and/or feeding device for a coil holder and/or a laminated core (13),

    further comprising a transport device for the formed conductor elements (11), in order to insert these into the coil holder or the laminated core (13),

    further comprising an ultrasound probe (2), having an anvil (23), a stop plate (24), a lateral slider (22) and a sonotrode (21),

    further comprising a laser welding device,

    further comprising a control device formed to control the components according to the production method according to claims 1 to 12.

14. Device according to claim 13,
    **characterised in that**
    further comprising an electrical measuring device is provided, by means of which the electrical conductivity of the coil winding or motor winding (3) is measured.

**Revendications**

1. Procédé de fabrication d'un bobinage (3) pour des moteurs électriques ou des transformateurs électriques, dans lequel, un élément conducteur (11) est réalisé à partir de conducteurs vernis et/ou à partir de torons vernis, et est inséré dans un support de bobinage, de préférence un noyau de bobine ou un paquet de tôles (13) et dans lequel des noeuds de passage (14) ou des noeuds finaux sont réalisés par liaison mécanique et/ou électroconductrice d'embouts de plusieurs conducteurs isolés par du vernis (12) et/ou de torons isolés par du vernis, afin de relier entre eux deux éléments conducteurs (11) ou plus,
**caractérisé en ce que**
d'abord, dans une étape, après la réalisation d'un élément conducteur (11) et avant l'insertion d'un élément conducteur (11) réalisé dans le support de bobinage, est effectué un compactage par ultrason des embouts de conducteurs vernis (11e) et/ou embouts de torons vernis à raccorder afin d'éliminer le vernis d'isolation et **en ce que**, après l'insertion des éléments conducteurs (11), plus particulièrement de tous les éléments conducteurs (11) dans le support de bobinage, dans une étape suivante, au moyen d'une soudure au laser, une liaison par liaison de matière est réalisée entre les embouts de conducteurs (11e) et/ou les embouts de torons à raccorder.

2. Le procédé selon la revendication 1,
   **caractérisé en ce que**
   la soudure au laser permet de réaliser en même temps une liaison afin d'obtenir un conducteur électrique massif, de préférence isolé par un vernis ou brut.

3. Le procédé selon l'une des revendications 1 à 2,
   **caractérisé en ce que**
   par l'intermédiaire d'un poussoir latéral réglable (22), avant ou pendant le compactage aux ultrasons, une géométrie de noeuds définie, plus particulièrement une largeur de noeuds déterminée, est réalisée, en fixant les embouts de conducteurs (11e) et/ou les embouts de torons à raccorder entre le poussoir latéral réglable (22) et une plaque de butée (24) et/ou **en ce que**, pendant le compactage aux ultrasons, l'énergie des ultrasons est introduite, par l'intermédiaire d'une sonotrode (21), dans les embouts de conducteurs (11e) et/ou embouts de torons fixés entre le poussoir latéral réglable (22) et la plaque de butée (24), dans lequel la sonotrode (21) est disposée en face d'une enclume (23).

4. Le procédé selon l'une des revendications précédentes,
   **caractérisé en ce que**
   pendant le compactage aux ultrasons, l'énergie des ultrasons est telle que, au point de jonction, a lieu une augmentation de la température afin d'éliminer thermiquement le vernis des embouts de conducteurs (11e) et/ou des embouts de torons et de souder à froid au moins une partie des embouts de conducteurs (11e) et/ou des embouts de torons entre eux, de préférence **en ce que** l'énergie des ultrasons est telle que, en plus de l'élimination du vernis, une liaison électrique et/ou mécanique d'au moins une partie, plus particulièrement d'une grande partie, des embouts de conducteurs (11e) et/ou embouts de torons, est réalisée.

5. Le procédé selon l'une des revendications précédentes,
**caractérisé en ce que**
lors du compactage aux ultrasons, un rapport déterminé entre la hauteur et la largeur d'un noeud de passage (14) ou d'un noeud final est réalisé.

6. Le procédé selon l'une des revendications précédentes,
**caractérisé en ce que**
lors de la soudure au laser, l'énergie du laser est telle que, entre les embouts de conducteurs (11e) et/ou embouts de torons pré-compactés par compactage aux ultrasons, apparaît un matériau en fusion, dans lequel ceux-ci sont reliés entre eux par liaison de matière.

7. Le procédé selon l'une des revendications précédentes,
**caractérisé en ce que**
lors de la soudure au laser et/ou lors du compactage aux ultrasons, aucun additif de soudure n'est ajouté et/ou
lors de la soudure au laser et/ou lors du compactage aux ultrasons, aucun élément de liaison se liant avec les embouts de conducteurs (11e) et/ou embouts de torons n'est utilisé.

8. Le procédé selon l'une des revendications 2 à 7,
**caractérisé en ce que**
le conducteur électrique massif enjambe une distance afin de relier le noeud de passage (14) ou le noeud final avec un deuxième noeud de passage (14) ou noeud final distant.

9. Le procédé selon l'une des revendications 2 à 8,
**caractérisé en ce que**
le conducteur électrique massif ou son embout de conducteur électrique brut (11e) permet de relier le noeud de passage (14) ou le noeud final avec un composant électronique (7), de préférence **en ce que** le conducteur électrique massif ou son embout de conducteur brut supporte un composant électronique (5) et/ou **en ce que** l'embout de conducteur brut ou le conducteur électrique est un fil de raccordement d'un composant électronique (5).

10. Le procédé selon l'une des revendications 2 à 9,
**caractérisé en ce que**
le conducteur électrique massif est un conducteur électrique pré-formé, de préférence afin de former une géométrie prédéterminée, plus particulièrement une géométrie courbe, plus particulièrement un appareil de bobinage, à partir de deux noeuds de passage (14) reliés par l'intermédiaire du conducteur électrique pré-formé.

11. Le procédé selon la revendication 9 ou 10,
**caractérisé en ce que**
la soudure au laser pour le raccordement du composant électronique (5) a lieu conjointement, de préférence simultanément, avec la soudure au laser pour la liaison par liaison de matière des embouts de conducteurs (11e) ou embouts de torons à raccorder.

12. Le procédé selon l'une des revendications précédentes,
**caractérisé en ce que**
entre le compactage aux ultrasons et la soudure au laser, est effectué un nettoyage des embouts d'un ou plusieurs éléments conducteurs (11).

13. Dispositif pour la fabrication d'un bobinage et/ou bobinage de moteur (3) comprenant les composants de moteur suivants

un dispositif d'alimentation pour une alimentation en fils conducteurs isolés par vernis et/ou de torons isolés par vernis,
comprenant en outre un dispositif de formage afin de former des éléments conducteurs (11) à partir des fils conducteurs isolés par vernis et/ou des torons isolés par vernis,
comprenant en outre un dispositif de maintien et/ou un dispositif d'introduction pour un support de bobine et/ou paquet de tôles (13),
comprenant en outre un dispositif de transport pour les éléments conducteurs (11) formés, afin d'insérer ceux-ci dans le support de bobine ou le paquet de tôles (13),
comprenant en outre une tête à ultrasons (2), comprenant une enclume (23),
une plaque de butée (24), un poussoir latéral (22) et une sonotrode (21), comprenant en outre un dispositif de soudure au laser,
comprenant en outre un dispositif de commande qui est conçu pour contrôler les composants selon le procédé de fabrication selon l'une des revendications 1 à 12.

14. Le dispositif selon la revendication 13,
**caractérisé en ce que**
un dispositif de mesure électrique est en outre prévu, au moyen duquel la conductivité électrique du bobinage ou du bobinage du moteur (3) est mesurée.

Figur 1

Figur 2

Figur 3

Figur 4

Figur 5

Figur 6a　　　　　　　　　Figur 6b

Figur 7a

Figur 7b

Figur 7c

Figur 7d

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1187299 A2
- WO 2011076515 A1
- DE 102009059307 A1
- WO 2007128790 A1
- WO 9510866 A1